# EUROPÄISCHE PATENTSCHRIFT

(11) **EP 0 425 059 B1**
(45) Veröffentlichungstag und Bekanntmachung des Hinweises auf die Patenterteilung: **08.12.1993**
(21) Anmeldenummer: 90250265.7
(22) Anmeldetag: 18.10.1990
(51) Int. Cl.: B60J 5/04

(54) **Rohrförmiges Stahlprofil für die Türverstärkung**
Tubular steel profile for door reinforcement
Profilé en acier de forme tubulaire pour renforcer les portes de véhicules

(30) Priorität: 26.10.1989 DE 3935964; 15.10.1990 DE 4032992
(43) Veröffentlichungstag der Anmeldung: 02.05.1991
(73) Patentinhaber: MANNESMANN Aktiengesellschaft, 40027 Düsseldorf (DE)
(72) Erfinder: Klippel, Horst, Dipl.-Ing., W-4030 Ratingen (DE)
(74) Vertreter: Meissner, Peter E., Dipl.-Ing.

(56) Entgegenhaltungen:
- EP-A- 0 284 566
- DE-A- 3 209 052
- FR-A- 1 441 051
- GB-A- 2 056 330
- US-A- 2 200 555
- US-A- 4 750 779

## Beschreibung

Die Erfindung betrifft ein Hohlprofil als Aufprallträger für die Verstärkung der Tür eines Kraftfahrzeuges, insbesondere eines Personenkraftwagens gemäß dem Gattungsbegriff des Anspruches 1.

Diese sogenannten Türverstärkerrohre dienen als Versteifung von Kraftfahrzeugtüren, die im Falle eines seitlichen Zusammenstoßes die Aufprallenergie aufnehmen und in mechanische Arbeit umwandeln. Dadurch soll der Zusammenhalt der Türkonstruktion gewährleistet werden. Damit ein solches Türverstärkerrohr diese Sicherheitsfunktion übernehmen kann, müssen beispielsweise folgende Werte erfüllt werden.
Zugfestigkeit Rm mind. 1100 N/mm²
Streckgrenze Rt mind. 800 N/mm²
Bruchdehnung A5 mind. 8 % oder
ein Arbeitsaufnahmevermögen W-150 von mindestens 1900 Joule je nach Abmessung des Profiles.

Diese Mindestanforderungen können je nach Spezifikation des Automobilherstellers niedriger oder höher liegen.

Das Arbeitsaufnahmevermögen wird getestet, indem ein Türverstärkerrohr in einem 3-Punkt-Biegeversuch 150 mm weit durchgebogen wird. Dabei wird die aufgebrachte Kraft über den Biegeweg registriert und der Flächeninhalt unterhalb der Kurve ermittelt. Dieses Integral ergibt dann das gesuchte Arbeitsaufnahmevermögen.

Im Automobilbau werden neben vielen speziellen Entwicklungen zwei grundlegende Probleme ständig verfolgt, das ist zum einen das Gewicht des Kraftfahrzeuges zu reduzieren und zum anderen den passiven Sicherheitsschutz fiir die Fahrzeuginsassen zu erhöhen.

Ein Lösungsvorschlag in dieser Richtung ist der DE-C-37 28 476 zu entnehmen, bei dem durch Verwendung einer besonderen Stahllegierung die Werte für die Zugfestigkeit und Streckgrenze eines Türverstärkerrohres gegenüber dem bekannten Standder Technik erhöht sind. Nachteilig bei diesem Vorschlag ist, daß die festigkeitssteigernde Wirkung nur durch Zulegierung teuerer Elemente die Nickel und Molybdän erreicht wird.

Nach einem anderen gattungsbestimmenden Vorschlag (DE-A-36 06 024) wird zur Verstärkung der Fahrzeugtür ein stranggepreßtes Trägerhohlprofil aus Leichtmetall beidends in der Fahrzeugtür festgelegt. Dieses vorzugsweise nahezu einen quadratischen Querschnitt aufweisende Profil muß zur Kompensation niedrigerer Festigkeitswerte dickwandig ausgelegt werden, wodurch der Vorteil des geringeren spezifischen Gewichtes der Leichtmetallegierung weitgehend eliminiert wird.

Damit dieses Profil eine ausreichende Verwindungssteifigkeit aufweist sind die Profilwände dickwandiger ausgelegt und kragen unter Bildung von Wulstabschnitten über die die Profilwände miteinander verbindenden Querwände hinaus. Alternativ zum quadratischen Querschnitt wird auch ein Profil mit einem rechteckigen Querschnitt vorgeschlagen, wobei die längere Erstreckungsachse in Aufprallrichtung liegt. Dieses Profil ist für schmale Fahrzeugtüren mit geringer Einbautiefe nicht geeignet, da zur Abdeckung der Türfläche eine Mindesterstreckung senkrecht zur Aufprallrichtung erforderlich ist. Außerdem ist dieses Hohlprofil nur wenig anpassungsfähig an unterschiedliche Fahrzeugtüren, da jede Änderung die Anschaffung eines teuren Strangpreßwerkzeuges bedeutet.

Aufgabe der Erfindung ist es ein Hohlprofil zu entwickeln, das bei Verwendung eines kostengünstigen Werkstoffes und einer einfachen Herstellung ein geringes Gewicht und ein hohes Arbeitsaufnahmevermögen aufweist und für den Einbau auch in schmale Fahrzeugtüren geeignet ist.

Diese Aufgabe wird mit den im kennzeichnenden Teil des Anspruches 1 angegebenen Merkmalen gelöst. Vorteilhafte Ausbildungen sowie ein Verfahren zur Herstellung eines solchen Profiles sind in Unteransprüchen festgelegt.

Bei dem vorgeschlagenenmehrförmigen Stahlprofil macht man sich die Erkenntnis zunutze, daß das Arbeitsaufnahmevermögen unter anderem von der Größe des Widerstandsmomentes des Konstruktionsteiles abhängig ist. Da das Widerstandsmoment nur eine von der konstruktiven Ausgestaltung abhängige Größe ist, weist das erfindungsgemäße rohrförmige Stahlprofil einen längs sich erstreckenden Abschnitt mit einer gekrümmten äußeren Kontur und einem von der Kreisform abweichenden Querschnitt auf, dessen längere Erstreckungsachse mindestens 20 % länger ist als die senkrecht dazu stehende kürzere Erstreckungsachse. Damit das in der längeren Erstreckungsachse liegende größere Widerstandsmoment voll wirksam werden kann, liegt beim Einbau in der Fahrzeugtür die längere Erstreckungsachse des Stahlprofilquerschnittes parallel zur Auftreffstoßrichtung. Der verformte Querschnitt kann vorzugsweise elliptisch oder oval sein und sich über die ganze Länge oder über einen mittleren Bereich des Stahlprofils erstrecken.

Die Umformung des kreisrunden Querschnittes zu einem elliptischen oder ovalen Querschnitt erfolgt über Kaltdrücken nach dem Härten eines einen kreisrunden Querschnitt aufweisenden Ausgangsrohres. Dabei wird das Material in dem verformten Abschnitt kaltverfestigt, wobei die Kaltverfestigung ebenfalls zur Erhöhung des Arbeitsaufnahmevermögens beiträgt. Damit die Geometrieänderung und die Kaltverfestigung wirksam ausgenutzt werden können, sollte der Umformgrad mindestens 15 % betragen. Das Ausgangsrohr mit kreisrundem Querschnitt kann in nahtloser oder geschweißter Ausführung hergestellt werden, wobei die üblichen Rohrherstellungsverfahren wie u. a. Warmwalzen bzw. Schweißen (z.B. HF-Verfahren) angewendet werden können. Die erforderliche Festigkeit und Streckgrenze werden im Regelfall über ein Glühen mit anschließendem Abschrecken in Wasser oder Öl oder an Luft eingestellt. Alternativ kann auch ein Werkstoff verwendet werden, der die Härtung des Stahlprofils direkt aus der Walzhitze ohne anschließende separate Wärmebehandlung ermöglicht.

Die Erhöhung der Verformungsarbeit durch Ausnutzung eines höheren Widerstandsmomentes bei gleichzeitiger Kaltverfestigung des verformten Abschnittes kann dazu verwendet werden, die Wanddicke und/oder den Durchmesser des Stahlprofils entsprechend zu reduzieren, um damit Gewicht einzusparen. Alternativ kann die Erhöhung auch dazu verwendet werden, das rohrförmige gehärtete Stahlprofil durch ein anschließendes Feuerverzinken mit einem Korrosionsschutz zu versehen, ohne Gefahr zu laufen, daß die durch die Anlaßwirkung des Verzinkens herabgesetzten mechanischen Werte unter die geforderten Mindestwerte absinken.

Neben einem elliptischen bzw. ovalen Querschnitt sind auch andere von der Kreisform abweichende einfache Querschnitte wie z. B. ein rechteckiger Querschnitt vorstellbar. Alle eine Kante aufweisenden Querschnitte sind aber schwerer herzustellen im Vergleich zu einem ovalen oder elliptischen Querschnitt. Die Herstellung der letztgenannten Querschnitte ist denkbar einfach, da es ausreichend ist, das kreisrunde Ausgangsrohr unter eine Presse zu legen und entweder mit ebenen Platten oder mit entsprechend geformten Gesenken den gewünschten Querschnitt abschnittsweise oder über die ganze Länge anzuformen. Alternativ ist es auch bekannt, Stahlprofile mit einem ovalen Querschnitt direkt durch ein Warmwalzverfahren herzustellen. Der Transport solcher Profile im Adjustagebereich ist mit Schwierigkeiten verbunden, da die einfache Rolltechnik versagt. Das Richten solcher Profile, vor allem aber im gehärteten Zustand, ist prinzipiell möglich, aber sehr schwierig durchzuführen; die dazu erforderlichen Richtmaschinen sind aber konstruktiv sehr aufwendig und können nur durchmesserspezifisch verwendet werden. Bei größeren Abmessungsänderungen muß der Richtrollensatz jeweils komplett ausgetauscht werden. Aus diesem Grunde ist dieses Alternativverfahren nicht weiter verfolgt worden.

Der Effekt einer Erhöhung der Verformungsarbeit kann nur dann genutzt werden, wenn sich der Abschnitt mit einem von der Kreisform abweichenden Querschnitt über eine bestimmte Länge im Verhältnis zur Gesamtlänge erstreckt. Die Mindestlänge dieses Abschnittes sollte deshalb 25 Prozent von der Gesamtlänge betragen. In gleicher Weise ist es auch erforderlich, daß das Verhältnis der großen zur kleinen Achse des Querschnittes einen bestimmten Betrag übersteigt, damit der Unterschied zur Kreisform signifikant ist. Dieses Verhältnis sollte deshalb als Untergrenze einen Wert von 1,20, bevorzugt bei einem elliptischen Querschnitt einen Wert von 1,25 aufweisen.

Im Hinblick auf eine Optimierung wird weiterhin vorgeschlagen, den Abschnitt so zu gestalten, daß der Querschnitt in der Stahlprofilmitte das größte Verhältnis von großer zu kleiner Achse aufweist und nach beiden Enden hin abfallend dem Wert 1, was der Kreisform entspricht, zustrebt. Dies würde sich insbesondere für einen über die ganze Länge des rohrförmigen Stahlprofiles sich erstreckenden Abschnitt anbieten, da im Hinblick auf das Arbeitsaufnahmevermögen der mittlere Bereich den größten Beitrag für die Höhe des Arbeitsaufnahmevermögens beisteuert.

Entsprechend den bekannten mathematischen Formeln für den Zusammenhang zwischen Biegelinie und Widerstandsmoment wird weiterbildend für den mittleren Bereich eine Verstärkung vorgeschlagen. Diese besteht aus einer zylindrischen Hülse aus Metall, die vor dem Kaltdrücken zu einem elliptischen oder ovalen Querschnitt als Außen- und/oder Innenrohr auf bzw. in das rohrförmige Stahlprofil geschoben wird. Zur Lagefixierung dieser verstärkenden Hülse wird beispielsweise die Hülse mit einem Kleber versehen oder die Hülse über Schweißen oder Löten mit dem rohrförmigen Stahlprofil verbunden. Eine andere Art der Fixierung ist dann möglich, wenn eine geschlitzte Hülse verwendet wird, die hinsichtlich ihrer Abmessungen so gewählt wird, daß eine Klemmwirkung eintritt. Eine Klemmwirkung ist auch bei einer geschlossenen Hülse möglich, wenn dafür gesorgt wird, daß im Falle einer Innenhülse diese eine dünnere Wand und im Falle einer Außenhülse diese eine dickere Wand aufweist als das Stahlprofil. Dies steht im Zusammenhang mit dem von der Wanddicke abhängigen Rückfederverhalten nach dem Kaltdrücken.

Alternativ zur Anordnung einer verstärkenden Hülse wird weiterbildend vorgeschlagen, den Abschnitt mit dem ovalen oder elliptischen Querschnitt mit einer dickeren Wand im Vergleich zu den angrenzenden Bereichen zu versehen. Dies hat den Vorteil, daß der Übergang vom verdickten Bereich in die angrenzenden Bereiche kontinuierlich erfolgt und kein Befestigungsproblem auftritt. Solche über eine bestimmte Länge sich erstreckende Verdickung, unabhängig ob die Verdickung radial nach außen oder nach innen sich erstreckt bzw. gleichmäßig nach außen und nach innen verteilt ist, können über unterschiedliche Verfahrensweisen hergestellt werden. Eine der Möglichkeiten ist z.B. ein Ziehen mit Stufendorn (DE 30 21 482) oder eine spanlose Umformung wie Drücken, Rollen oder Hämmern (DE 36 10 481). Der Vorteil der integralen Verdickung gegenüber den aufgeschobenen bzw. eingeschobenen Hülsen besteht darin, daß die Verstärkung im Hinblick auf das zulässige Außenmaß, das Gewicht des Bauteiles und die Größe des tragenden Querschnittes gezielt radial einmal mehr nach außen bzw. mehr nach innen verschoben werden kann.

Um die Einknickgefahr des rohrförmigen Stahlprofiles im Falle des Aufpralles zu verringern bzw. auf einen Zeitpunkt nach Erreichen des vorgeschriebenen 150 mm Biegeweges zu verschieben, wird zusätzlich vorgeschlagen, den Innenraum des mittleren Abschnittes mit einem ein niedriges spezifisches Gewicht aufweisenden Mittel zu füllen. Stoffmischungen für solche verstärkende Ausschäumungen sind z. B. der US-PS 4,861,097 zu entnehmen. Alternativ können auch Metallschäume oder Holz verwendet werden.

Der Vorteil des vorgeschlagenen rohrförmigen Stahlprofiles ist darin zu sehen, daß in einfacher und kostengünstiger Weise über die Erhöhung des Widerstandsmomentes und die mit der Verformung zum ovalen oder elliptischen Querschnitt einhergehende Kaltverfestigung des umgeformten Abschnittes das Gewicht des rohrförmigen Stahlprofiles reduziert werden kann. Dabei kann weiterhin auf die einfache und kostengünstige Herstellung eines Rundrohres als Ausgangsrohr unter Inanspruchnahme vorhandener Produktionslinien zurückgegriffen werden.

Anhand eines Ausführungsbeispieles wird das erfindungsgemäße rohrförmigen Stahlprofil näher erläutert.
Es zeigen:
- Figur 1: einen Längsschnitt durch ein erfindungsgemäßes rohrförmiges Stahlprofil mit drei dazugehörigen Querschnitten entlang der Linien A-A, B-B und C-C.
- Figur 2: In grafischer Darstellung das Arbeitsaufnahmevermögen eines erfindungsgemäßen rohrförmigen Stahlprofil im Vergleich zu einem Standardrohr.
- Figur 3: einen Längsschnitt durch ein mittenverstärktes Profil mit einem dazugehörigen Querschnitt entlang der Linie D-D.
- Figur 4: einen Längsschnitt durch ein integral mittenverstärktes Profil mit einem dazugehörigen Querschnitt entlang der Linie E-E.

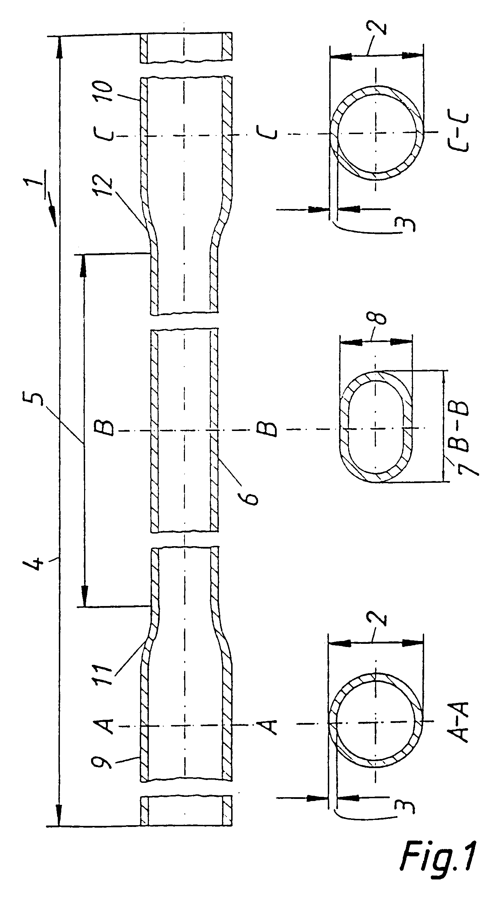

In Figur 1 ist in einem unterbrochenen Längsschnitt das erfindungsgemäße rohrförmige Stahlprofil 1 dargestellt und direkt darunter liegend drei dazugehörige Querschnitte des rohrförmigen Stahlprofiles 1 entlang den Linien A-A, B-B und C-C. Das beispielhaft hier ausgesuchte Ausgangsrohr weist nach dem Härten folgende Abmessungen auf. Äußerer Durchmesser 31,8 mm (2), Wanddicke 2,3 mm (3), Gesamtlänge 864 mm (4).

Beispielhaft wird bei diesem rohrförmigen Stahlprofil 1 im Mittenbereich ein über eine Länge 5 von 250 mm sich erstreckender Abschnitt 6 mit einem ovalen Querschnitt B-B kalt angeformt. Die große Achse 7 dieses ovalen Querschnittes B-B ist hier beispielsweise 37,0 mm und die kleine Achse 8 25,4 mm. Das Verhältnis von großer zu kleiner Achse des ovalen Querschnittes B-B beträgt dabei 1,45, was einer Verformung von 20 % entspricht. Der Anteil der Länge 5 des verformten Abschnittes 6 zur Gesamtlänge 4 des Türverstärkerrohres 1 beträgt hier 29 %. Die beiden an den verformten Abschnitt 6 anschließenden Bereiche 9, 10 weisen unverändert einen kreisrunden Querschnitt auf, hier durch die Querschnitte A-A und C-C gekennzeichnet. Die Übergänge 11,12 vom verformten Abschnitt 6 zu den unverformten Abschnitten 9,10 sind stark abgerundet, damit keine Kerbwirkung auftreten kann, die das Arbeitsaufnahmevermögen erheblich reduzieren würden.

Für das konkrete Beispiel ist als Werkstoff ein handelsüblicher Kohlenstoff-Mangan-Titan-Borstahl mit der Zusammensetzung in Massenprozent von C = 0,19, Si = 0,42, Mn = 1,19, P = 0,012, S =0,001, Al = 0,049, Cu = 0,02, Cr = 0,03, Ni = 0,03, Mo = 0,01, Ti = 0,054, B = 0,0037 und N = 0,0147 Rest Eisen und übliche Verunreinigungen verwendet worden. Bezüglich des Arbeitsaufnahmevermögens lag für diese Abmessungen die Forderungen des Kunden bei mindestens 1900 Joule. Das aus diesem Werkstoff über Warmwalzen erzeugte Rohr wurde nach dem Walzen geglüht und mit Wasser abgeschreckt.

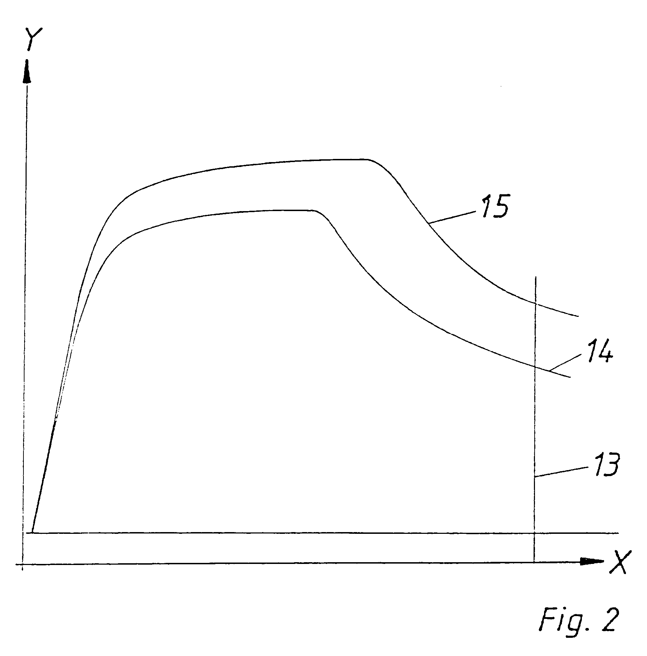

In Figur 2 ist grafisch die aufgebrachte Kraft (Y-Achse) über den Biegeweg (X-Achse) dargestellt, wobei die Endlinie 13 den durch eine Prüfspezifikation vorgegebenen Biegeweg von 150 mm markiert. Die Fläche unter der Kurve ist das gesuchte Arbeitsaufnahmevermögen. Kurve 14 ist der Kraft-Biegeweg eines rohrförmigen Stahlprofiles mit einem über die ganze Länge sich erstreckenden kreisrunden Querschnitt mit einem äußeren Durchmesser von 31,8 mm und einer Wanddicke von 2,3 mm. Die Fläche unter der Kurve ergibt einen Wert für das Arbeitsaufnahmevermögen von 2628 Joule. Im Vergleich dazu zeigt Kurve 15 den Kraft-Biegeweg des erfindungsgemäßen rohrförmigen Stahlprofiles 1 mit einem über eine Länge 5 von 250 mm sich erstreckenden Abschnitt 6, der einen ovalen Querschnitt B-B aufweist. Das Arbeitsaufnahmevermögen beträgt in diesem Falle 3288 Joule, was einer Erhöhung um 25 % entspricht, die für eine entsprechende Wanddicken- bzw. Durchmesser- und damit Gewichtsreduzierung benutzt werden kann.

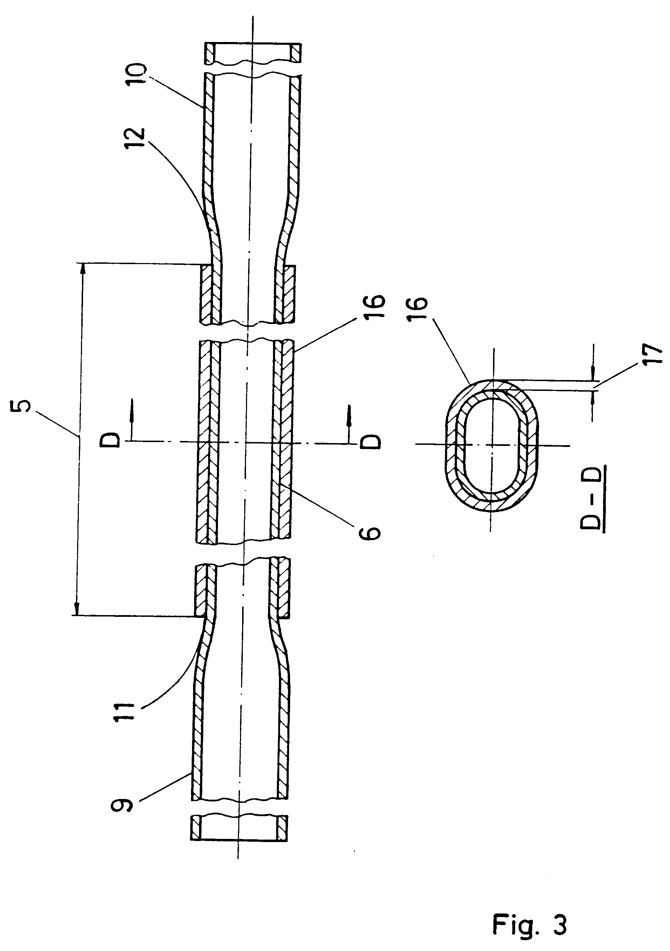

In der Figur 3 ist in einem unterbrochenen Längsschnitt und in einem dazugehörigen Querschnitt entlang der Linie D-D ein anderes Ausführungsbespiel dargestellt, wobei für gleiche Teile gleiche Bezugszeichen verwendet wurden. Der Mittenbereich 6 des rohrförmigen Stahlprofiles wird beispielsweise durch eine Außenhülse 16 verstärkt, die vor dem Kaltumformen auf das Ausgangsrohr aufgeschoben und z. B. durch Kleben lagemäßig fixiert wird. Da die Außenhülse 16 unabhängig vom Ausgangsrohr gefertigt werden kann, kann die Wanddicke 17 variieren, um ein Optimum hinsichtlich Widerstandserhöhung und Gewicht des Profiles zu erreichen.

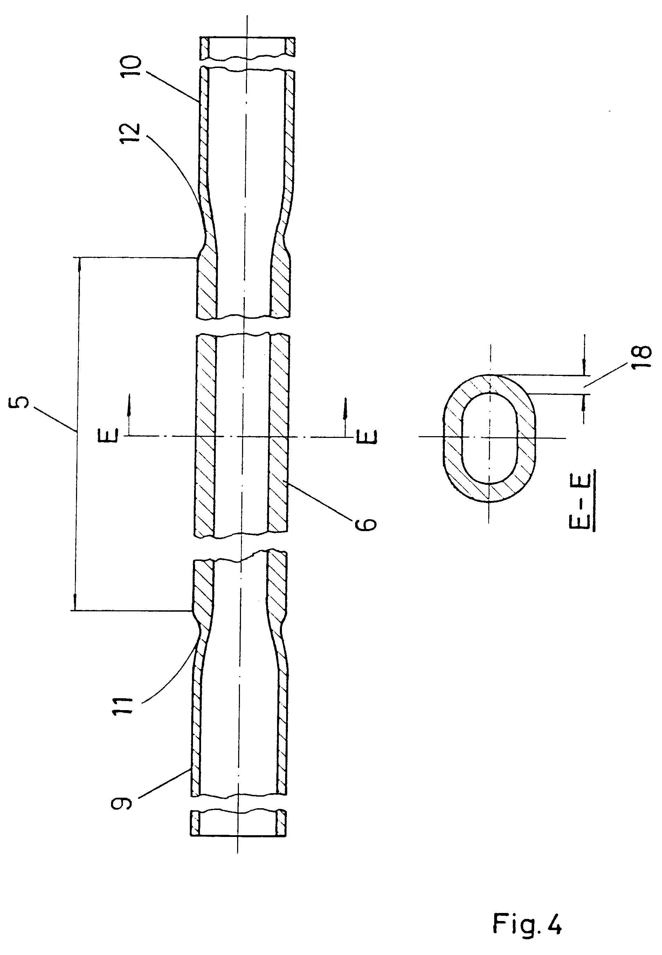

Figur 4 zeigt in einem unterbrochenen Längsschnitt und in einem dazugehörigen Querschnitt entlang der Linie E-E ein weiteres Ausführungsbeispiel, wobei für gleiche Teile gleiche Bezugszeichen verwendet wurden. Der Mittenbereich 6 ist im Unterschied zum in Fig. 3 dargestellten Ausführungsbeispiel nicht durch eine Außenhülse 16, sondern integral durch eine dickere Wand 18 verstärkt. In diesem Ausführungsbeispiel ist die dickere Wand 18 radial nach außen gelegt worden, sie könnte ebensogut nach innen oder gleichmäßig verteilt nach innen und außen gelegt werden. Vor der abschließenden Kaltumformung des in seiner Wanddicke verstärkten Abschnittes 6, um einen ovalen oder elliptischen Querschnitt herzustellen, wird das rohrförmige Stahlprofil zuerst auf eine dick-dünnere Wand umgeformt und anschließend wärmebehandelt. Die Größe der verdickten Wand 18 sowie deren radiale Lage kann im Hinblick auf das Gewicht und des angestrebten Widerstandsmomentes optimiert werden.

## Patentansprüche

1. Hohlprofil als Aufprallträger für die Verstärkung der Tür eines Kraftfahrzeuges, insbesondere eines Personenkraftwagens mit einem längs sich erstreckenden Abschnitt (6), der einen von der Kreisform abweichenden Querschnitt und unterschiedlich lange, senkrecht aufeinander stehende Erstreckungsachsen (7, 8) aufweist, dadurch gekennzeichnet, daß das Hohlprofil als rohrförmiges Stahlprofil (1) mit hoher Festigkeit, Zähigkeit und Verformungsarbeit ausgebildet ist und der von der an den Enden des Hohlprofils vorliegenden Kreisform abweichende Querschnitt eine gekrümmte äußere Kontur aufweist und als Ellipse oder oval ausgebildet ist, deren längere Erstreckungsachse (7) mindestens 20 % länger ist als die kürzere Erstreckungsachse (8).

2. Hohlprofil nach Anspruch 1, dadurch gekennzeichnet, daß der Abschnitt (6) sich über eine bestimmte Länge (5) im mittleren Bereich des rohrförmigen Stahlprofils (1) erstreckt.

3. Hohlprofil nach Anspruch 1 dadurch gekennzeichnet, daß das Verhältnis von großer (7) zu kleiner Achse (8) der Ellipse mindestens 1,25 beträgt.

4. Hohlprofil nach den Ansprüchen 1 - 3,
**dadurch gekennzeichnet**,
daß die Erstreckung des Abschnittes (6) mindestens 25 % der Gesamtlänge (4) beträgt.

5. Hohlprofil nach den Ansprüchen 1, 2, und 4
**dadurch gekennzeichnet**,
daß in der Mitte des geformten Abschnittes (6) das Verhältnis von großer zu kleiner Achse am größten ist und nach beiden Ende hin auf den Wert 1 abfällt.

6. Hohlprofil nach den Ansprüchen 1 und 2,
**dadurch gekennzeichnet**,
daß der Abschnitt (6) eine Verstärkung aufweist, die als Außen-(16) und/oder Innenhülse mit dem rohrförmigen Stahlprofil verbunden ist.

7. Hohlprofil nach den Ansprüchen 1 und 2,
**dadurch gekennzeichnet,**
daß der Abschnitt (6) eine Verstärkung aufweist, die als geschlitzte Außen- und/oder Innenhülse mit dem rohrförmigen Stahlprofil verbunden ist, wobei der Schlitz dem Innenraum des Kraftfahrzeuges zugewandt ist.

8. Hohlprofil nach den Ansprüchen 1 und 2,
**dadurch gekennzeichnet**
daß der Abschnitt (6) eine dickere Wand aufweist als die anschließenden Bereiche (9, 10) und in diese abgerundet übergeht.

9. Hohlprofil nach einem der vorhergehenden Ansprüche 1 - 8,
**dadurch gekennzeichnet**
daß der Innenraum des Abschnittes (6) mit einem ein niedriges spezifisches Gewicht aufweisendes Mittel gefüllt ist.

10. Verfahren zur Herstellung eines Hohlprofils nach den Ansprüchen 1 - 5, bei dem ein Ausgangsrohr gehärtet und anschließend in Längen geschnitten wird,
**dadurch gekennzeichnet**
daß nach dem Härten ein längs sich erstreckender Abschnitt des rohrförmigen Strahlprofiles kaltgedrückt wird.

11. Verfahren zur Herstellung eines Hohlprofils nach den Ansprüchen 6 und 7, bei dem ein Ausgangsrohr gehärtet und anschließend in Langen geschnitten wird,
**dadurch gekennzeichnet,**
daß nach dem Härten oder Schneiden eine verstärkende metallische Hülse auf bzw. in das rohrförmige Stahlprofil geschoben wird und anschließend dieser dickwandigere Bereich kaltgedrückt wird.

12. Verfaren zur Herstellung eines Hohlprofils nach Anspruch 8, bei dem ein Ausgangsrohr umgeformt, gehärtet und anschließend in Längen geschnitten wird,
**dadurch gekennzeichnet**,
daß das rohrförmige Stahlprofil abschnittsweise auf eine dick-dünnere Wand umgeformt und der dickwandigere Abschnitt nach dem Härten kaltgedriickt wird.

13. Verfahren nach dem Ansprüchen 10 - 12,
**dadurch gekennzeichnet**,
daß die Umformung ohne Abstützung erfolgt.

14. Verfahren nach den Ansprüchen 10 - 12,
**dadurch gekenzeichnet**,
daß die Umformung in einem Gesenk erfolgt.

15. Verfahren nach den Ansprüchen 10 - 12,
**dadurch gekennzeichnet**,
daß der Umformgrad mindestens 15 % beträgt.

## Claims

1. A hollow section as impact girder for the reinforcement of the door of a motor vehicle, in particular of a private motor vehicle, with a longitudinally extending portion (6) which has a cross-section deviating from a circular shape and axes of extent (7, 8) of different lengths standing normal to one another, characterised in that the hollow section is designed as a tubular steel section (1) having high strength, toughness and work of deformation and the cross-section deviating from a circular shape which is present at the ends of the hollow section has a curved outer contour and is designed as an ellipse or is of oval design, the longer axis of extent (7) of which is at least 20% longer than the shorter axis of extent (8).

2. A hollow section according to claim 1, characterised in that the portion (6) extends over a specific length (5) in the central region of the tubular steel profile (1).

3. A hollow section according to claim 1 characterised in that the ratio of large (7) to small (8) axis of the ellipse amounts to at least 1.25.

4. A hollow section according to claims 1 to 3, characterised in that the extent of the portion (6) amounts to at least 25% of the overall length (4).

5. A hollow section according to claims 1, 2 and 4, characterised in that the ratio of large to small axis is greatest in the centre of the shaped portion (6) and falls away to the value 1 towards both ends.

6. A hollow section according to claims 1 and 2, characterised in that the portion (6) has a reinforcement which is connected as an outer (16) and/or inner sleeve to the tubular steel section.

7. A hollow section according to claims 1 and 2, characterised in that the portion (6) has a reinforcement which is connected as a slotted outer and/or inner sleeve to the tubular steel section, the slot facing the interior of the motor vehicle.

8. A hollow section according to claims 1 and 2, characterised in that the portion (6) has a thicker wall than the adjoining regions (9, 10) and merges rounded-off into these.

9. A hollow section according to any one of the preceding claims 1 to 8, characterised in that the interior of the portion (6) is filled with a medium which has a low specific weight.

10. A method of producing a hollow section according to claims 1 to 5, in which an initial tube is hardened and then cut into lengths, characterised in that after the hardening a longitudinally extending portion of the tubular steel section is cold-pressed.

11. A method of producing a hollow section according to claims 6 and 7, in which an initial tube is hardened and then cut into lengths, characterised in that after the hardening or cutting a reinforcing metallic sleeve is pushed onto or respectively into the tubular steel section and this thicker-walled region is then cold-pressed.

12. A method of producing a hollow section according to claim 8, in which an initial tube is reshaped, hardened and then cut into lengths, characterised in that the tubular steel section is reshaped in sections to a thick-thinner wall and the thicker-walled portion is cold-pressed after the hardening.

13. A method according to claims 10 to 12, characterised in that the reshaping is effected without support.

14. A method according to claims 10 to 12, characterised in that the reshaping is effected in a die.

15. A method according to claims 10 to 12, characterised in that the degree of reshaping amounts to at least 15%.

## Revendications

1. Profilé creux pour support de choc destiné au renforcement de la porte d'un véhicule automobile, en particulier une voiture de tourisme, comportant une partie (6) s'étendant longitudinalement, qui présente une section transversale s'écartant d'une forme circulaire et des axes d'extension (7,8) perpendiculaires l'un par rapport à l'autre, de longueurs différentes,
caractérisé en ce que le profilé creux est réalisé sous la forme d'un profilé en acier (1), en forme de tube, avec une résistance mécanique, une dureté et un travail de déformation élevés et la section transversale, s'écartant de la forme circulaire existant aux extrémités du profilé creux, présente un contour externe courbe et forme une ellipse ou un ovale, dont l'axe d'extension (7) le plus étendu est au moins 20% plus long que l'axe d'extension (8) le plus court.

2. Profilé creux selon la revendication 1,
caractérisé en ce que la partie (6) s'étend sur une longueur déterminée (5) dans la zone centrale du profilé (1) en acier et en forme de tube.

3. Profilé creux selon la revendication 1,
caractérisé en ce que le rapport entre le grand axe (7) et le petit axe (8) de l'ellipse vaut au moins 1,25.

4. Profilé creux selon les revendications 1 à 3,
caractérisé en ce que la longueur de la partie (6) est d'au moins 25% de la longueur totale (4).

5. Profilé creux selon les revendications 1, 2 et 4,
caractérisé en ce qu'au centre de la partie formée (6), le rapport entre le grand axe et le petit axe est le plus important et diminue, vers les deux extrémités, jusqu'à la valeur 1.

6. Profilé creux selon les revendications 1 et 2,
caractérisé en ce que la partie (6) est munie d'un renforcement qui est relié, sous forme de manchon externe (6) et/ou manchon interne, au profilé en acier et en forme de tube.

7. Profilé creux selon les revendications 1 et 2,
caractérisé en ce que la partie (6) est munie d'un renforcement qui est relié, sous forme de manchon externe et/ou interne à fente, au profilé en acier et en forme de tube, la fente se trouvant en regard de l'espace interne du véhicule automobile.

8. Profilé creux selon les revendications 1 et 2,
caractérisé en ce que la partie (6) présente une paroi plus épaisse que les zones adjacentes (9,10) et en ce qu'il joint celles-ci de façon arrondie.

9. Profilé creux selon l'une des revendications 1 à 8,
caractérisé en ce que l'espace interne de la partie (6) est rempli d'un moyeu présentant un poids volumique faible.

10. Procédé pour la réalisation d'un profilé creux selon les revendications 1 à 5, dans lequel un tube est trempé et est ensuite découpé en longueurs,
caractérisé en ce qu'après la trempe, une partie du profilé en acier et en forme de tube, s'étendant longitudinalement, est pressée à froid.

11. Procédé pour la réalisation d'un profilé creux selon les revendications 6 et 7, dans lequel un tube est trempé et est ensuite découpé en longueurs,
caractérisé en ce qu'après la trempe ou le découpage, un manchon métallique de renfort est glissé sur ou dans le profilé en acier et en forme de tube et, ensuite, cette zone à paroi plus épaisse est pressée à froid.

12. Procédé pour la réalisation d'un profilé creux selon la revendication 8, dans lequel un tube est formé, trempé et ensuite découpé en longueurs,
caractérisé en ce que le profilé en acier et en forme de tube est formé, par segments, en une paroi épaisse-plus mince et en ce que le segment à paroi épaisse est pressé à froid après la trempe.

13. Procédé selon les revendications 10 à 12,
caractérisé en ce que la déformation est effectuée sans support.

14. Procédé selon les revendications 10 à 12,
caractérisé en ce que la déformation est effectuée dans une matrice.

15. Procédé selon les revendications 10 à 12,
caractérisé en ce que le coefficient de déformation est égal à au moins 15%.
